# EUROPEAN PATENT APPLICATION

(11) **EP 2 224 735 A1**
(43) Date of publication of application: **01.09.2010**
(21) Application number: 09171081.4
(22) Date of filing: 23.09.2009
(51) Int. Cl.: H04N 5/765

(54) **Audio/video reproducing apparatus and method for setting audio/video**

(30) Priority: 27.02.2009 JP 2009046868
(71) Applicant: Kabushiki Kaisha Toshiba, Minato-ku Tokyo (JP)
(72) Inventor: Kuwahara, Kazuki, Minato-ku, Tokyo (JP)
(74) Representative: HOFFMANN EITLE

(57) **Abstract**

According to an aspect of embodiments, an audio/video reproducing apparatus includes: a plurality of terminals which are configured to receive input signal and output output signal; a setting module which sets a mode of the terminals, the mode including input mode for receiving the input signal and output mode for outputting the output signal; an execution module which executes input processing for receiving the input signal or output processing for outputting the output signal based on the mode of the terminals; and a notification module which notifies an information regarding the input processing or the output processing caused by switching the mode to given mode when the setting module is requested to switch the mode to the given mode.

## Description

### BACKGROUND

### 1. Field

The present invention relates to an audio/video reproducing apparatus which reproduces audio and video and a method for setting an audio/video input/output mode.

### 2. Description of the Related Art

With the advance of multi-functionalization of an audio/video reproducing apparatus, only audio signals are output to external devices such as external speakers or AV (Audio-Visual) amplifiers without video display. In addition, with the advance of diversification of users' demands concerned with video and audio reproduction, it has been necessary to satisfy both users' demands that lots of signal input systems (input terminals) should be provided and that lots of signal output systems (output terminals) should be provided.

On such circumstances, there has been widely used a method for assigning an output or input function to a specific terminal based on user's desire so that the specific terminal serves as an input terminal and also as an output terminal (hereinafter referred to as 'I/O shared terminal'). For example, a terminal assigned as an output terminal is set so that only an audio signal is output from the terminal without video display.

JP-A-2000-92432 discloses a camera-integrated recording apparatus which achieves simultaneous monitoring by outputting an audio signal input through an audio I/O shared terminal to a video I/O shared terminal when audio is recorded on recorded (image-recorded) video by after-recording.

Although JP-A-2000-92432 relates to assignment of an output signal to an I/O shared terminal capable of being used for both signal inputting and signal outputting, there is no description about video outputting when only an audio signal is output to an output terminal. For example, there is no description about output mode switching or constraints in an audio and video output process when the audio and video output process follows a process of outputting only an audio signal.

An object of the invention is to provide an audio/video I/O mode setting method which sets an output mode of an audio output while associating the condition of a video output with the condition of the audio output in an audio/video reproducing apparatus having signal terminals capable of being used at least for signal outputting, and an audio/video reproducing apparatus using this method.

### SUMMARY OF THE INVENTION

According to an embodiment of the invention, when an audio signal is output to an external device by using shared terminals in which a plurality of output modes for outputting at least an audio or video signal and a plurality of input modes are set, a user is notified of output mode switching for outputting the audio and video signal or constraints in the video and audio output process following only the audio output process.

According to another embodiment of the invention, at mode switching of shared terminals in which a plurality of output modes for outputting at least an audio or video signal and a plurality of input modes are set, information as to whether each mode serves as an input terminal or as an output terminal and information as to the timing and signal for each terminal used as an output terminal are displayed to thereby notify the user of the behavior of each terminal after mode switching.

According to a further embodiment of the invention, when there is an obstacle to recording or already set reserved recording in the condition that shared terminals in which a plurality of output modes for outputting at least an audio or video signal and a plurality of input modes can be set are instructed to change the output mode, a warning can be displayed to thereby notify the user of constraints caused by the change of the setting.

According to a further embodiment of the invention, as a method for determining whether the change of the output mode is to be executed or not, that is, whether the I/O mode is to be switched or not in the condition that shared terminals in which a plurality of output modes for outputting at least an audio or video signal and a plurality of input modes can be set are instructed to change the output mode, information as to whether a setting of the reserved recording using the terminals is present or not is confirmed to thereby reduce factors causing failure in reserved recording, etc. with use of the audio/video reproducing apparatus.

Accordingly, operability of the audio/video reproducing apparatus is improved so that load imposed on the user can be reduced.

According to an aspect of the present invention, there is provided an audio/video reproducing apparatus including: a plurality of terminals which are configured to receive an input signal and output an output signal; a setting module which sets a mode of the terminals, the mode including an input mode for receiving the input signal and an output mode for outputting the output signal; an execution module which executes an input processing for receiving the input signal or an output processing for outputting the output signal based on the mode of the terminals; and a notification module which notifies an information regarding the input processing or the output processing caused by switching the mode to given mode when the setting module is requested to switch the mode to the given mode.

According to another aspect of the present invention, there is provided an audio/video reproducing method including: setting a mode indicating an input mode for receiving input signal or an output mode for outputting output signal; executing an input processing for receiving the input signal or an output processing for outputting the output signal based on the mode; and notifying an information regarding the input processing or the output processing caused by switching the mode to given mode when the switching of the mode to the given mode is requested.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is a schematic view showing an example of configuration of an audio/video reproducing apparatus to which an embodiment of the invention is applied.

Fig. 2 is a schematic view showing an example of important part of the configuration for achieving 'mode switching of shared terminals in which output modes and input modes can be set' in the audio/video reproducing apparatus shown in Fig. 1.

Fig. 3 is a schematic view showing an example of display of a user input (graphical user interface (GUI)) screen for achieving 'change of audio output mode' in the audio/video reproducing apparatus shown in Figs. 1 and 2.

Fig. 4 is a schematic view showing an example of display of a GUI screen following the GUI screen shown in Fig. 3.

Fig. 5 is a schematic view showing an example of display of a "reservation list" screen which is displayed when [Confirm Reservation] is instructed (input) in the GUI screen shown in Fig. 3.

### DETAILED DESCRIPTION

An example of an embodiment of the invention will be described below with reference to the drawings.

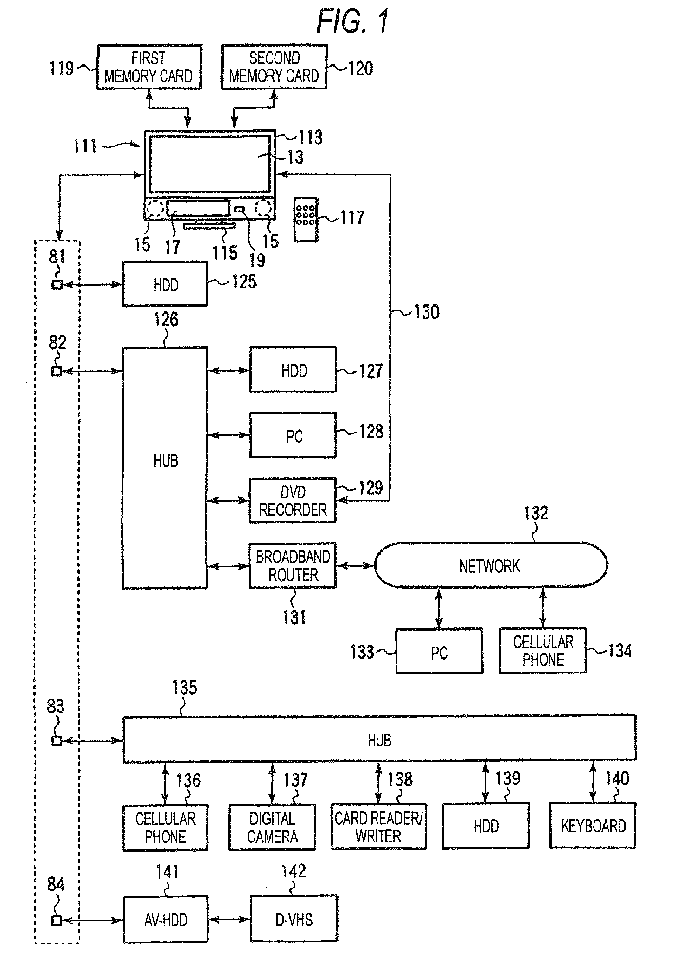

Fig. 1 shows an example of an audio/video recording/reproducing apparatus according to the invention, such as a television receiver (digital television broadcast receiver) and a network system built around the television receiver. Although the audio/video recording/reproducing apparatus will be described below, for example, the audio/video recording/reproducing apparatus may be a recorder device capable of recording input video (motion picture data) and audio (audio data) and capable of outputting video and audio at the time of reproduction of the data, a tuner device capable of selecting a channel, acquiring video and audio from the selected channel and reproducing the video and audio or a set-top box capable of receiving programs distributed from a broadcast base (distribution) station via a cable mainly represented by an optical fiber. Although respective members will be described below, each member referred to as 'module' may be achieved by hardware or by software with use of a CPU, etc.

The television receiver 111 chiefly includes a thin cabinet 113, and a stand 115 which makes the cabinet 113 stand up and supports the cabinet 113.

A flat panel video display unit 13, audio reproducing units 15, an operation portion 17 and a reception portion 19 are disposed in the cabinet 113. For example, the flat panel video display unit 13 includes an SED (Surface-conduction Electron-emitter Display) display panel, a liquid crystal display panel or the like. The audio reproducing units 15 are chiefly speakers. The operation portion 17 receives input of a control signal corresponding to a user's operation. The reception portion 19 receives wireless or infrared operation information based on a user's operation from a remote controller 117 which will not be described in detail.

In addition, a first memory card 119 such as an SD (Secure Digital) memory card, an MMC (Multimedia Card) and a memory stick are inserted/removed into/from the television receiver 111. Information of programs, pictures, etc. are recorded/reproduced on/from the first memory card 119.

Further, a second memory card (IC card) 120 on which, for example, contract information has been recorded are inserted/removed into/from the television receiver 111. Contract information, etc. is read from the second memory card 120.

The television receiver 111 further has a first LAN (Local Area Network) terminal 81, a second LAN terminal 82, a USB (Universal Serial Bus) terminal 83, and an i.LINK terminal 84.

The first LAN terminal 81 is used as a port for exclusive use of an LAN support HDD (Hard Disk Drive). The first LAN terminal 81 is used for recording/reproducing information on/from an LAN support HDD 125 connected to the first LAN terminal 81 by Ethernet (registered trademark). The LAN support HDD 125 is an NAS (Network Attached Storage).

When the first LAN terminal 81 is provided as a port for exclusive use of the LAN support HDD in this manner, program information provided in high-definition image quality is recorded stably on the HDD 125 without being affected by other network environments, other network use conditions, etc.

The second LAN terminal 82 is used as a port which supports a general LAN using Ethernet (registered trademark). For example, the second LAN terminal 82 is used for connection with external devices such as an LAN support HDD 127, a PC 128 as a contents server and a hard disk device (HDD)-including DVD (Digital Versatile Disk) recorder 129 through a hub 126, and for information transfer (i.e. information exchange) to/from these connected devices.

The PC 128 as a contents server is formed as a UPnP (Universal Plug and Play) support device which has a function for operating as a contents server device in a home network and which has service for providing URI (Uniform Resource Identifier) information required for contents access.

Since digital information transmitted through the second LAN terminal 82 is information only concerned with control, it is necessary to provide the DVD recorder 129 with a dedicated analog transmission line 130 for transmitting analog video and audio information between the DVD recorder 129 and the digital television broadcast receiver 111.

The second LAN terminal 82 is connected to a network 132 such as the Internet through a broadband router 131 connected to the hub 126, so that the second LAN terminal 82 is used for transmitting information from/to a PC 133 as a contents server, a cellular phone 134, etc.

The PC 133 as a contents server is formed as a UPnP support device which has a function for operating as a contents server device and which further has service for providing URI information required for contents access.

The USB terminal 83 is used as a port which supports a general USB. For example, USB devices such as a cellular phone 136, a digital camera 137, a memory card reader/writer 138, an HDD 139, a keyboard 140, etc. are connected to the USB terminal 83 through a hub 135, so that the USB terminal 83 is used for information transmission from/to these USB devices.

For example, devices such as AV-HDD 141 and D(Digital)-VHS(Video Home System) 142 are series-connected to the i.LINK terminal 84, so that the i.LINK terminal 84 is used for information transmission from/to these devices.

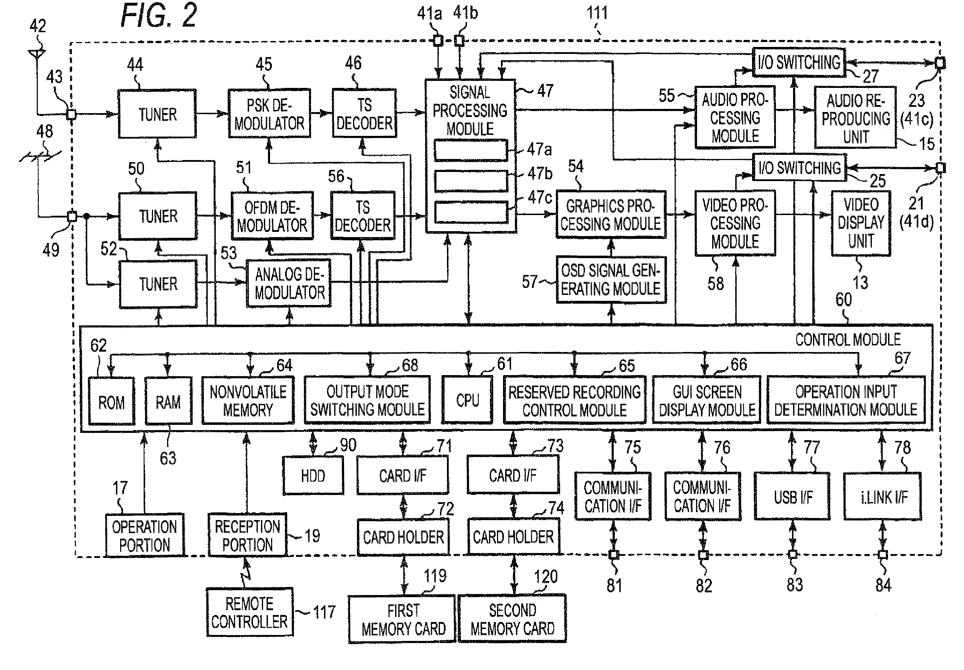

Fig. 2 shows a main signal processing system of the audio/video recording/reproducing apparatus (television receiver) 111 shown in Fig. 1.

The television receiver 111 includes the video display unit 13, the audio reproducing units 15, the operation portion 17 and the remote controller receiving portion 19 as described above with reference to Fig. 1. The television receiver 111 further includes a control module 60 which controls processing of signals from these aforementioned units, output of signals to these aforementioned units, operation and display of each of these units, etc. The control module 60 may be referred to as 'control block' or 'main board'.

The control module 60 includes a main control IC (LSI) represented by a CPU (Central Processing Unit) 61. The control module 60 controls each of the aforementioned units in response to operation contents corresponding to operation information (input) from the operation portion 17 or a (remote controller input) control signal which is obtained by receiving, at the reception portion 19, an operation information transmitted from a remote controller.

The control module 60 further includes an ROM (Read Only Memory) 62, an RAM (Random Access Memory) 63, and an NVM (Non Volatile Memory) 64. The ROM 62 holds control programs to be executed by the CPU 61. The RAM 63 provides a work area to the CPU 61. The NVM 64 stores and holds various kinds of setting information, control information, etc. As will be described later, the NVM 64 temporarily holds 'reserved recording information', for example, given as a control input (user input) from the operation portion 17 or the remote controller 117 until "reserved recording" is set by a user operation.

Incidentally, the control module 60 includes various signal processing blocks for implementing predetermined operations or processes based on the control programs stored in the ROM (Read Only Memory) 62.

The control module 60 further includes a reserved recording control module 65, a GUI (Graphical User Interface) screen display module 66, an operation input determination module 67, etc. The reserved recording control module 65 holds information concerned with the set "reserved recording" such as [start time], [end time], [channel] and [rate]. The GUI screen display module 66 controls display of a GUI screen used for various settings and user operations (user inputs) such as setting of "reserved recording". The operation input determination module 67 detects whether or not there is any user's operation input. The control module 60 further includes an output mode switching module 68 which sets the output mode of a video signal output to the video display unit 13 and an output terminal (video signal) 21 via a video processing module 58 and the output mode of an audio signal output to the audio reproducing units 15 and an output terminal (audio output) 23 via an audio processing module 55. Although the control module 60 will be described later, it is assumed here that at least one built-in type large capacity recording device such as an HDD module 90 is connected to a television receiver 111.

The control module 60 is further connected to a first card holder 72 through a first card I/F (Interface) 71. The first memory card 119 is mounted in the first card holder 72. In this manner, the control module 60 makes it possible for the user to record/reproduce information such as programs or pictures via the first memory card 119 mounted in the first card holder 72 and the card I/F 71.

The control module 60 is further connected to a second card holder 74 through a second card I/F 73. The second memory card 120 is mounted in the second card holder 74. In this manner, the control module 60 makes it possible for the user to watch or listen to input broadcast waves or distributed programs in accordance with contract information or the like via the second memory card 120 mounted in the second card holder 74 and the second card I/F 73.

Any number of interfaces such as first and second communication interfaces (I/F) 75 and 76, a USB interface (I/F) 77 and an i.LINK interface (I/F) 78 are further connected to the control module 60, so that the control module 60 serves as an external device, a hub (extended device) or a network controller suited to each interface.

For example, the LAN terminal 81 is connected to the first communication interface 75, and an external (NAS (Network Attached Storage)) HDD (Hard Disk Drive) which is not shown but supports an LAN (network) is connected to the LAN terminal 81. The LAN terminal 81 is used as a port which supports a general LAN using Ethernet (registered trademark). For example, when a hub is connected to the LAN terminal 81, the hub permits connection of devices such as an LAN support HDD, a PC (personal computer) and an HDD-including DVD recorder.

For example, the second LAN terminal 82 is connected to the second communication I/F 76. In this manner, the control module 60 makes it possible to exchange information mutually with the respective devices (see Fig. 1) connected to the second LAN terminal 82.

The USB interface (I/F) 77 is connected to the USB port 83. As shown in Fig. 1, USB devices such as the cellular phone 136, the digital camera 137, the memory card reader/writer 138, the HDD 139 formed to be accessible through a USB interface, the keyboard 140, etc. are connected to the USB I/F 77 via the hub 135 connected to the USB port 83. The USB interface (I/F) 77 makes it possible to exchange information with the respective USB devices.

External devices such as an AV (Audio-Visual)-HDD 141 and a D (Digital)-VHS (Video Home System) 142 or an external terrestrial digital tuner can be series-connected to the i.LINK interface (I/F) 78 via the port 84. The i.LINK interface (I/F) 78 makes it possible to exchange information with any one of the connected devices.

Since the control module 60 is connected to the first LAN terminal 81 through the communication I/F 75, information including video and audio is transmitted from/to the LAN support HDD 125 connected to the first LAN terminal 81 under the control of the control module 60. The control module 60 serves as a DHCP (Dynamic Host Configuration Protocol) server which performs control to assign an IP (Internet Protocol) address to the LAN support HDD 125 connected to the first LAN terminal 81.

The control module 60 is further connected to the second LAN terminal 82 through the communication I/F 76. Thus, the control module 60 can exchange information with the respective devices (see Fig. 1) connected to the second LAN terminal 82.

The control module 60 is further connected to the USB terminal 83 through the USB I/F 77. Thus, the control module 60 can exchange information with the respective devices (see Fig. 1) connected to the USB terminal 83 via the USB I/F 77.

The control module 60 is further connected to the i.LINK terminal 84 through the i.LINK I/F 78. Thus, the control module 60 can exchange information mutually with the respective devices (see Fig. 1) connected to the i.LINK terminal 84 via the i.LINK I/F 78.

Although not described herein in detail, it is a matter of course that, for example, a network controller not shown but based on the DLNA (Digital Living Network Alliance (registered trademark)) standard or the like, and a communication module not shown but based on the Bluetooth (registered trademark) standard may be prepared in addition to the respective interfaces or in place of any one or two or more of the interfaces so that a recorder device or an HDD device or a portable terminal device which are enabled to exchange data is connected via the network controller and communication module.

When an HDMI (High-Definition Digital Media Interface) terminal not shown is prepared in addition to the respective interfaces or in place of any one or two or more of the interfaces, for example, a DVD recorder, an AV amplifier or a hub is connected to the HDMI terminal though details thereof will be omitted. Incidentally, a device such as a DVD recorder or a DVD player is connected to the AV amplifier. External devices provided with HDMI terminals, such as an AV amplifier, a PC (Personal Computer), an HDD-including DVD recorder, a DVD player, etc. are connected to the hub, so that a motion picture file (video data) or an audio file (audio data) is read or reproduced from and written (recorded) on a portable terminal such as a portable music player or a video player.

When an external device connected through the HDMI terminal complies with the HDMI-CEC (Consumer Electronics Control), the operation of the connected external device is controlled, for example, via the television receiver based on operation of the remote terminal (remote controller) etc. of the television receiver.

In the aforementioned television receiver 111, a satellite digital television broadcast signal received through a BS/CS digital broadcast receiving antenna 42 is fed to a satellite digital broadcast tuner module 44 through an input terminal 43.

A tuner module 44 selects at least two desired channel broadcast signals in accordance with a control signal from the control module 60 and outputs the selected broadcast signals to a PSK (Phase Shift Keying) demodulator module 54.

The PSK demodulator module 45 demodulates each broadcast signal selected by the tuner module 44 based on the control signal from the control module 60 to thereby obtain a transport stream (TS) including the desired program and output the transport stream to a TS decoder module 46.

The TS decoder module 46 applies a TS decoding process (depacktization) to the multiplexed transport stream signal based on the control signal from the control module 60 and outputs digital video and audio signals (PES (Packetized Elementary Stream)) of the desired program to a buffer memory 47a of a signal processing module 47.

The TS decoder module 46 outputs various kinds of data (service information) for acquiring programs, electronic program guide (EPG) information, program attribute information (program category etc.) and subtitle information sent by digital broadcasting, to the control module 60 (RAM 63).

Terrestrial digital television broadcast signals received through the terrestrial broadcast receiving antenna 48 are input to a terrestrial digital broadcast tuner module 50 through an input terminal 49.

The tuner module 50 selects a broadcast signal of at least one desired channel based on the control signal from the control module 60, and outputs the selected broadcast signal to an OFDM (Orthogonal Frequency Division Multiplexing) demodulator module 51.

The OFDM demodulator module 51 demodulates at least one broadcast signal selected by the tuner module 50 in accordance with control of the control module 60 to thereby acquire a transport stream including the desired program and output the acquired transport stream to a TS decoder module 56.

The TS decoder module 56 applies a TS decoding process to the multiplexed transport stream (TS) signal in accordance with control of the control module 60, and outputs digital video and audio signals of the desired program to the signal processing module 47.

Terrestrial analog television broadcast signals received through the terrestrial broadcast receiving antenna 48 are input to a terrestrial analog broadcast tuner module 52 through an input terminal 49, so that a broadcast signal of a desired channel is selected by the tuner module 52. The broadcast signal selected by the tuner module 52 is demodulated to analog contents, i.e. analog video and audio signals by an analog demodulator module 53, so that the demodulated audio and video signals are output to the signal processing module 47.

The signal processing module 47 selectively applies predetermined digital signal processing to the digital video and audio signals fed from the TS decoder module 46 or 56 and held by the buffer memory 47a, so that the processed video and audio signals are output to a graphics processing module 54 and an audio processing module 55 respectively.

A plurality of input terminals 41a, 41b, 41c and 41d (four input terminals in the example shown in Fig. Fig. 2) are connected to the signal processing module 47.

Analog video and audio signals are input to the input terminals 41a to 41d respectively from the outside of the television receiver 111. As shown in Fig. 2, the first and second input terminals 41a and 41b are directly connected to the signal processing module 47. The third and fourth input terminals 41c and 41d are integrated with a video output terminal 21 and an audio output terminal 23, respectively. The video signal from the video processing module 58 is output to the video output terminal 21 through an I/O switching module 25. The audio signal from the audio processing module 55 is output to the audio output terminal 23 through an I/O switching module 27. Since the I/O switching modules 25 and 27 are arbitrarily switched to an input mode used for signal input or the aforementioned output mode used for signal output by control of the control module 60, the I/O switching modules 25 and 27 are used for inputting a signal (an input signal from the outside) to the signal processing module 47. The third input terminal 41c (audio output terminal 23) and the fourth input terminal 41d (video output terminal 21) are referred to as shared terminals in terms of characteristics thereof.

Incidentally, a section processing module 47b of the signal processing module 47 acquires various kinds of data for acquiring programs, electronic program guide (EPG) information, program attribute information (program category etc.), subtitle information etc. (service information, SI and PSI) etc. sent as digital broadcasting waves and outputs the acquired information to the control module 60 (RAM 63).

Analog video and audio signals fed from the signal processing module 47 or the analog demodulator 53 and the input terminals 41a to 41d respectively are selectively digitized, subjected to predetermined digital signal processing and then output to the graphics processing module 54 and the audio processing module 55.

Accordingly, for example, in the television receiver 111, while any channel program received by the satellite tuner module 44 and any channel program received by the terrestrial digital tuner module 50 or any channel program received by any tuner module and video and audio signals input to any of the input terminals 41a to 41d are simultaneously recorded on the HDD module 90, the external HDD 125 or the AV-HDD 141, one program designated by the user is output to the video display unit 13 and the audio reproducing units 15 via the video processing module 58 and the audio processing module 55. Further, an arbitrary program received by the tuner module 44 or 50 or video and audio signals input to the input terminals 41a or 41b is output from an arbitrary shared terminal, i.e. the input terminal 41c (audio output terminal 23) or the input terminal 41a (video output terminal 21).

As described above, various kinds of data for acquiring programs, electronic program guide (EPG) information, program attribute information (program category etc.), subtitle information, etc. (service information, SI and PSI) are input to the control module 60 (RAM 63) from the signal processing module 47. Accordingly, the control module 60 performs an image generating process to display EPG and subtitle information from these kinds of input information and outputs the generated image information to the graphics processing module 54. For example, during setting of "reserved recording", the acquired EPG information and conditions for the reserved recording are processed by the reserved recording control module 65 so that a GUI screen generated by the GUI screen display module 66 and an OSD (On Screen Display) signal generated by the graphics processing module 54 and the OSD module 57 as will be described later are output to the video display unit 13 and the video output terminal 21 (shared terminal 41d) via the video processing module 58. It is a matter of course that the video signal output to the video display unit 13 and the video output terminal 21 (shared terminal 41d) via the video processing module 58 is output in an output mode set by the output mode switching module 68 of the control module 60.

The graphics processing module 54 has a function of combining (1) a digital video signal fed from an AV decoder 47c of the signal processing module 47, (2) an OSD signal generated by the OSD signal generating module 57, (3) image data from data broadcasting and (4) EPG and subtitle signals generated by the control module 60, and outputting the combined data to the video processing module 58.

The graphics processing module 54 combines the OSD signal output of the OSD signal generating module 57 with the video signal output of the signal processing module 47 so that the OSD signal of the OSD signal generating module 57 and the video signal of the signal processing module 47 form halves of one screen respectively or one of the two outputs is displayed on the whole of one screen while the other output with a predetermined size is superposed on any position of the screen. In addition, the graphics processing module 54 superposes the output of the OSD signal generating module 57 with a 'semitransparent' state (in which part of the ordinary video signal is made transparent) on the ordinary video display in accordance with each α blending parameter and output the superposed video signal to the video display unit 13 or the video output terminal 21. When the broadcast signal comes with a subtitle signal and the subtitle information are displayed, the graphics processing module 54 performs a process of superposing the subtitle information on the video signal based on the control signal from the control module 60 and the subtitle information.

The digital video signal output from the graphics processing module 54 is fed to the video processing module 58. The video processing module 58 converts the digital video signal fed from the graphics processing module 54 into an analog video signal so that the analog video signal is reproduced as a video (motion picture/still picture) output on the video display unit 13, i.e. a display unit (monitor unit). It is a matter of course that, for example, an extended projection device (projector device) or an external monitor device may be connected as an external device to the video output terminal 21 connected to the video processing module 58. For example, a DVD recorder device using a DVD standard optical disk as a recording medium or a conventional video recorder device using a video tape as a recording medium may be connected to the video output terminal 21. As described above, the video output terminal 21 is used also as an input terminal 41d which is used for input of an input video signal to the signal processing module 47 via the I/O switching module 25 operated in accordance with control of the control module 60. It is a matter of course that a video signal output to the video output terminal 21 via the video processing module 58 is output in an output mode set by the output mode switching module 68 of the control module 60.

The audio processing module 55 converts a digital audio signal fed from the signal processing module 47 into an analog audio signal so that the audio output as vibration of air in an audible frequency range is reproduced by the audio reproducing units 15 represented by speakers, etc. Although not described in detail, it is a matter of course that the audio signal (audio output) may be output to an external speaker or an audio amplifier (mixer amplifier) connected to the audio output terminal 23 or to a headphone output terminal prepared as one form of the audio output terminal 23 so that the audio signal is reproduced as an audio output. As described above, the audio output terminal 23 is used also as an input terminal 41c which is used for inputting an input audio signal to the signal processing module 47 via the I/O switching module 27 operated in accordance with control of the control module 60. It is a matter of course that an audio signal output to the audio output terminal 23 via the audio processing module 55 is output in an output mode set by the output mode switching module 68 of the control module 60.

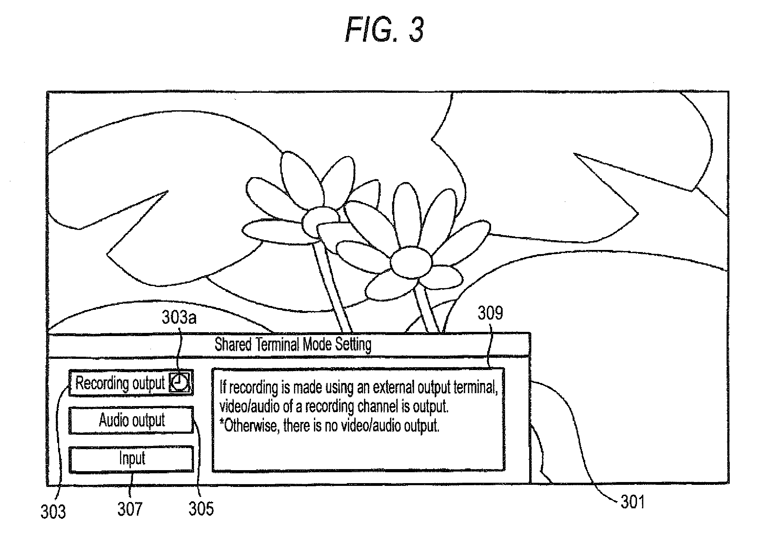

Fig. 3 shows an example of display of a user input (GUI (Graphic User Interface)) screen for switching the mode of each of shared terminals to an input mode or an output mode according to an embodiment of the invention.

As shown in Fig. 3, when the operation input determination module 67 detects a user's operation input for executing shared terminal mode setting via the remote controller terminal 117 or the operation portion 17 in the state that a broadcast signal of an arbitrary channel or video contents being currently reproduced is displayed on the video display unit 13, a GUI video output, i.e. a [Shared Terminal Mode Setting] display 301 of an OSD signal generated by the OSD module 57 is displayed on the video display unit 13 via the video processing module 58. In addition, an audio signal attached to the broadcasting signal or video contents being currently reproduced is input to the audio reproducing units 15 via the audio processing module 55 and reproduced as audio. Incidentally, the [Shared Terminal Mode Setting] display 301 is output to the video display unit 13 so that the [Shared Terminal Mode Setting] display 301 is superposed on the program or video contents being currently reproduced or video being currently displayed is made transparent with a predetermined transparency set by α blending. When the shared terminal 41d (video output terminal 21) is set as a signal output terminal by the I/O switching module 27 (video), a display output (video signal) by which the same video as that on the video display unit 13 is displayed is also output to the terminal 41d. Similarly, when the shared terminal 41c (audio output terminal 23) is set as a signal output terminal by the I/O switching module 25 (audio), an audio signal by which the same audio as that on the audio reproducing units 15 is reproduced is also output to the terminal 41c.

In Fig. 3, the [Shared Terminal Mode Setting] display 301 includes first, second and third display regions 303, 305 and 307 which can serve as screen display on the video display unit 13 to notify the user of whether the mode set in each shared terminal is an input mode or an output mode. The first display region 303 indicates a first output mode in which, for example, the shared terminal 41d (video output terminal 21) and the shared terminal 41c (audio output terminal 23) are set for outputting. The second display region 305 indicates a second output mode in which, for example, only the shared terminal 41c (audio output terminal 23) is set for outputting. The third display region 307 in Fig. 3 indicates an input mode in which at least one of the shared terminals is set for signal inputting.

In the example shown in Fig. 3, 'reverse display' or 'display with a color different from that of any other display region' of the first display region 303 means that the shared terminal 41d (video output terminal 21) and the shared terminal 41c (audio output terminal 23) are set as a 'recording output' mode which is the first output mode used for outputting video and audio signals allowed to be recorded by an external device. In addition, when the shared terminal 41d (video output terminal 21) and the shared terminal 41c (audio output terminal 23) have been set as the 'recording output' mode and recording reservation using these shared terminals have been registered, an icon (GUI), for example, emulating an 'analog clock' is displayed in a marker region 303a of the display region 303 as shown in Fig. 3 to thereby indicate that recording reservation using the shared terminal 41d (video output terminal 21) and the shared terminal 41c (audio output terminal 23) have been made (registered).

In the example shown in Fig. 3, even when 'recording output' has been set for recording reservation using the shared terminal 41d (video output terminal 21) and the shared terminal 41c (audio output terminal 23), the shared terminal 41d (video output terminal 21) and the shared terminal 41c (audio output terminal 23) is switched to an 'audio output mode (second output mode)' which is a mode for outputting only an 'audio signal' without outputting any video signal. However, when the 'audio output' mode has been set, recording using the shared terminal 41d (video output terminal 21) and the shared terminal 41c (audio output terminal 23) becomes recording without recording of any video signal because the video signal is not output to the shared terminal 41d (video output terminal 21), i.e. the audio signal is output only to the shared terminal 41c (audio output terminal 23).

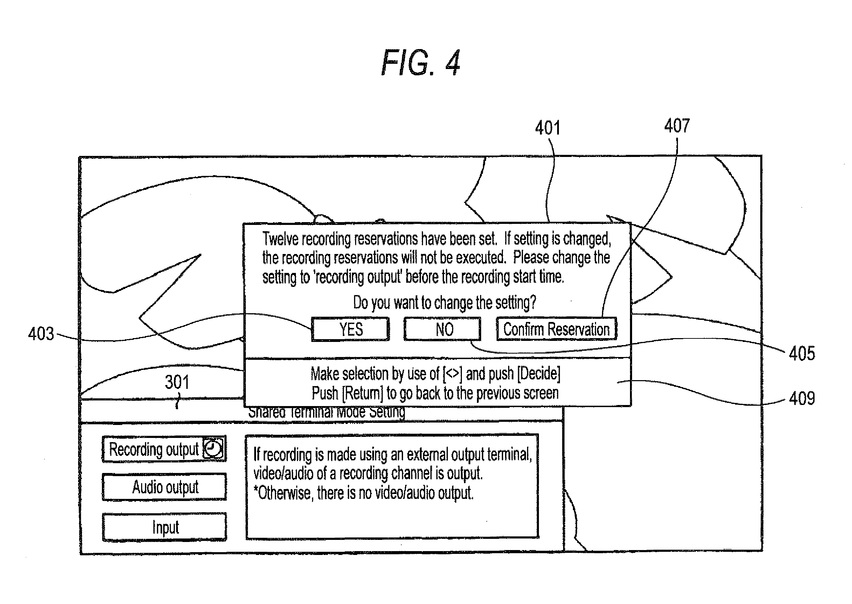

That is, when the 'audio output' mode has been set, the 'video signal' concerned with the 'recording output' as a function being currently executed is not output. Accordingly, the fact that output of the video signal to the video output terminal 21 is stopped and only the audio signal is output to the audio output terminal 23 is displayed as a 'Warning Screen' display 401 on the video display unit 13 as will be described later with reference to Fig. 4.

The display region 301 includes a 'message' region 309 which is set for displaying various messages to notify the user of information as to whether or not there is any audio output to the audio reproducing units 15 or the type of the output audio signal in the operating state of the television receiver 111 when the shared terminal 41c (audio output terminal 23) is set as an output terminal for audio outputting, i.e. the shared terminal is set as the second mode, or to notify the user of the fact that audio is output from the shared terminal only when recording using the shared terminal is set or the fact that video and audio signals (or audio data) of a recorded program are output during playback of the recorded program. For example, the message displayed in the region 309 may be recording start time, channel, rate, etc. of a program registered for reserved recording, may indicate reserved recording when the recording start time comes soon, or may indicate any display prepared by the GUI screen display module 66.

Fig. 4 shows an example of display of a warning screen which is displayed when an instruction (input) to change I/O mode setting is issued on the user input screen shown in Fig. 3 in the condition that reserved recording has been set.

When, for example, an instruction is issued to change the mode to an 'audio output' mode which is the second output mode for outputting only an audio signal to the shared terminal 41c (audio output terminal 23) without outputting any video signal to the shared terminal 41d (video output terminal 21), through a user operation on the remote controller terminal 117 or the operation portion 17, i.e. an instruction is issued to change the first output mode for outputting video and audio of a program or contents to be recorded by an external device to a second output mode for outputting only an audio signal to the terminal 23 (audio output) without outputting any video signal, in a state in which the [Shared Terminal Mode Setting] display 301 shown in Fig. 3 is displayed on the video display unit 13, i.e. in a state in which an arbitrary number of reserved recordings using the shared terminal 41d (video output terminal 21) and the shared terminal 41c (audio output terminal 23) have been registered, a 'warning screen' is displayed as a display 401 on the video display unit 13. Incidentally, the 'warning screen (display 401)' prepared in the GUI display control module 66 is superposed on video currently displayed on the video display unit 13 via the OSD signal generating module 57, the graphics processing module 54 and the video processing module 58.

That is, when the 'audio output' mode has been set, the 'warning screen' display 401 notifies the user of the registration of recording reservation while the current operation (mode) is kept until the user gives an instruction as to whether mode switching should be executed or not.

The 'warning screen' display 401 includes a [Yes] button display 403 for executing the change of the output mode, and a [No] button display 405 for aborting the change of the output mode. Incidentally, the 'warning screen' display 401 further includes a [Confirm Reservation] button display 407, and a [Guidance] display region 409. The [Confirm Reservation] button display 407 is provided to display a reservation confirmation screen for displaying the number of currently registered recording reservations, time, channel, rate, etc. when there is a request from the user. The [Guidance] display region 409 indicates guidance for guiding a user input (instruction) method by means of respective button displays.

When abortion (cancellation) of the change of the output mode is input by the user through the [No] button display 405, the 'warning screen' display 401 is deleted and the [Shared Terminal Mode Setting] display 301 is displayed again in the front. In the background, video display of the currently reproduced contents or currently displayed program is continued. Incidentally, when, for example, the not-shown [Return] button (key) of the remote controller terminal 117 is pushed on in accordance with the display indicated in the [Guidance] display region 409, the original video is displayed (video display of the currently reproduced contents or currently displayed program is continued and the [Shared Terminal Mode Setting] display 301 is displayed in front of the video).

When the user gives an instruction through the [Yes] button display 403 to execute the change of the output mode, mode setting is switched to the 'audio output' mode for outputting only the audio signal from the shared terminal 41c (audio output terminal 23).

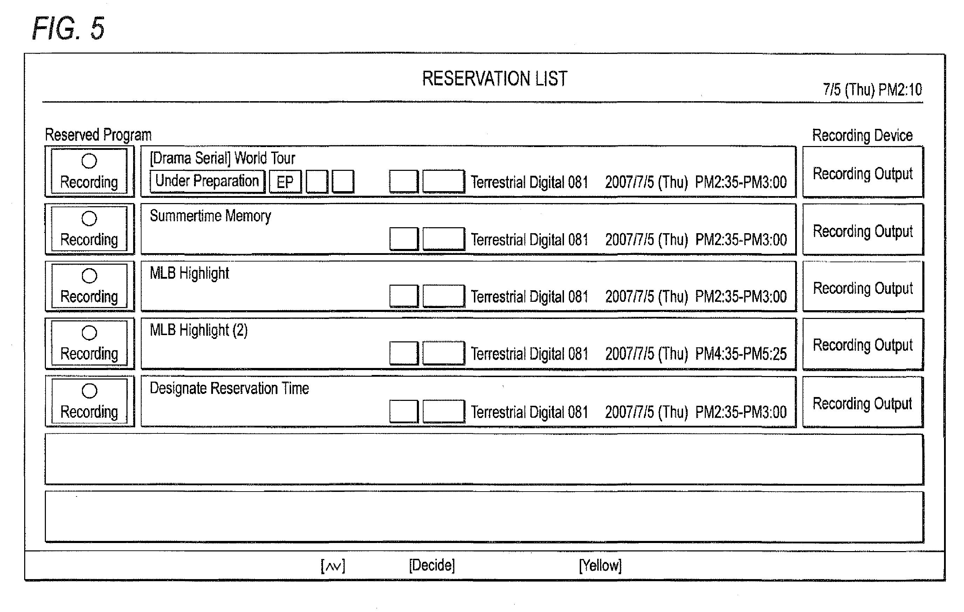

When an instruction is issued through the [Confirm Reservation] button display 407 to confirm reserved recording, the display is changed to a 'reservation list screen' display as shown in Fig. 5 by way of example (a "reservation list" screen is displayed). Accordingly, the user can monitor (visually recognize) the time before start of the soonest reservation recording and set an output mode for outputting only audio for the shared terminal 41c (audio output terminal 23) until then (it is a matter of course that abortion of mode switching may be considered because the started time of the soonest reservation recording is referred to).

When, for example, the shared terminal 41d (video output terminal 21) and the shared terminal 41c (audio output terminal 23) are set to serve as input terminals, video and audio signals are input, for example, from a video camera, etc. On this occasion, 'reverse display' or 'display with a color different from that of any other display region' of the third display region 307 in the [Shared Terminal Mode Setting] display 301 shown in Fig. 3 notifies the user of the fact that the shared terminals have been set as the input mode used for signal inputting.

As described above, according to an embodiment of the invention when an audio signal is output to an external device by use of shared terminals in which a plurality of output modes for outputting at least an audio or video signal and a plurality of input modes are set, a user can be informed of switching of the output mode when there is the video and audio output process or informed of constraints in the video and audio output process following the process for outputting only audio.

According to another embodiment of the invention, at mode switching of shared terminals in which a plurality of output modes for outputting at least an audio or video signal and a plurality of input modes are set, information as to whether each mode serves as an input terminal mode or as an output terminal mode and information as to the timing and type of the signal output when each shared terminal is used as an output terminal is displayed to thereby notify the user of the behavior of each terminal after mode switching.

According to a further embodiment of the invention, if there is an obstacle to recording or already set reversed recording when the user gives an instruction to switch the mode to an output mode for the shared terminals in which a plurality of output modes for outputting at least an audio or video signal and a plurality of input modes are set, a warning is displayed to notify the user of constraints caused by the change of the setting change.

According to a further embodiment of the invention, as a method for determining whether mode switching is should be executed or not, i.e. whether the I/O mode should be switched or not, when an instruction is given to change the mode to an output mode for the shared terminals in which a plurality of output modes for outputting at least an audio or video signal and a plurality of input modes are set, information as to whether or not there is any setting of reserved recording using the terminals are confirmed so that factors causing failure in reserved recording etc. using the audio/video reproducing apparatus is reduced.

Accordingly, operability of the audio/video reproducing apparatus is improved, so that load imposed on the user can be reduced.

The invention is not limited to the respective embodiments. To practically carry out the invention, various modifications or changes may be made without departing from the gist of the invention. The invention may be carried out by properly combining the embodiments as much as possible or removing parts from the embodiments. In this case, various effects achieved by the combination or removal is obtained.

## Claims

1. An audio/video reproducing apparatus comprising:
a plurality of terminals which are configured to receive input signal and output output signal;
a setting module which sets a mode of the terminals, the mode including input mode for receiving the input signal and output mode for outputting the output signal;
an execution module which executes input processing for receiving the input signal or output processing for outputting the output signal based on the mode of the terminals; and
a notification module which notifies an information regarding the input processing or the output processing caused by switching the mode to given mode when the setting module is requested to switch the mode to the given mode.

2. The audio/video reproducing apparatus according to claim 1, wherein the notification module notifies a suspension of an operation for outputting given signal caused by the switching of the mode at the setting module when the setting module is requested to switch the mode to the given mode.

3. The audio/video reproducing apparatus according to claim 1 further comprising a reservation module which reserves execution of the processing for signals using the terminals,
wherein the notification module notifies an existing of a reservation reserved by the reservation module when the reservation exists and the setting module is requested to switch the mode to the given mode.

4. The audio/video reproducing apparatus according to claim 3, wherein, when the setting module is requested to switch the mode to the given mode in a state that the execution module executes outputting video signal and audio signal in accordance with the mode set by the setting module or the reservation module reserves the execution of the processing for signals using the terminals, the notification module notifies that the execution module executes the output processing for outputting the output signal except video signal .

5. An audio/video reproducing method comprising:
setting a mode indicating input mode for receiving input signal or output mode for outputting output signal;
executing input processing for receiving the input signal or output processing for outputting the output signal based on the mode; and
notifying an information regarding the input processing or the output processing caused by switching the mode to given mode when the switching of the mode to the given mode is requested.
